# EUROPEAN PATENT APPLICATION

(11) **EP 2 154 660 A1**
(43) Date of publication of application: **17.02.2010**
(21) Application number: 07767046.1
(22) Date of filing: 05.06.2007
(51) Int. Cl.: G08C 17/00, G06K 19/00, G06K 19/07

(54) **ACTIVE NONCONTACT INFORMATION STORAGE DEVICE FOR STORING DETECTION VALUE BY SENSOR**

(71) Applicant: Fujitsu Limited, Kawasaki-shi, Kanagawa 211-8588 (JP)
(72) Inventor: SHIOTSU, Shinichi, Kawasaki-shi Kanagawa 211-8588 (JP); YAMADA, Isamu, Kawasaki-shi Kanagawa 211-8588 (JP); INANO, Satoshi, Kawasaki-shi Kanagawa 211-8588 (JP); ITASAKI, Akira, Kawasaki-shi Kanagawa 211-8588 (JP)
(74) Representative: Stebbing, Timothy Charles
(86) International application number: PCT/JP2007/061355
(87) International publication number: WO 2008/149422

(57) **Abstract**

An active-type information storage device (204) includes a memory (214), a battery (290), a timer (274), a receiver unit (250), a transmitter unit (230), and a control unit (210), a sensor unit (286, 288), a remaining power detector unit (292), and a power management unit (294). The power management unit determines an operation mode in accordance with a remaining power of the battery. In accordance with the operation mode, the control unit causes the receiver unit or the sensor unit to operate at a particular timing. In an intermittent sleep time period, the control unit causes the transmitter unit, the receiver unit, and the sensor unit to be in an inactive state. In a period after the sleep time period, the control unit causes the sensor unit to operate in the operation mode, and causes the memory to store the detected data from the sensor unit that is determined in accordance with the operation mode.

## Description

The present invention relates generally to an active-type information storage device which information can be read from and write into in a contactless manner, and in particular to an active-type information storage device of an energy saving type which includes a sensor and cumulatively stores values detected by the sensor.

### BACKGROUND

An RF ID tag with a battery power supply or of an active type, which may be attached to a merchandise article or the like, or carried by a person, transmits an RF signal at a transmission frequency that carries an ID and other information related to the article or the person, so that the RF signal is received and the information is read out by a reader device. The read-out information is further processed by a computer or the like, so that the distribution of the article or the action of the person is monitored and managed. The active-type RF ID tag with battery power supply has a longer communication range than a passive-type RF ID tag that receives power from a reader and writer device in a contactless manner, and hence is practical in use. However, the active-type RF ID tag transmits an RF signal in a cycle, has a risk of being tracked by a third party, and hence has a problem in the security. To address this security problem, there is an improved active-type RF ID tag that responds only to a tag ID request transmitted by the reader and writer device.

A reader and writer device can read an active-type RF ID tag which includes a sensor for sensing a physical value in its ambient environment and cumulatively stores data of such detected values, so that the detected value data is collected together with an ID of the RF ID tag.

Japanese Laid-open Patent Application Publication JP 2000-113130-A published on April 21, 2000 describes an IC tag detection system with low power consumption. This system includes a plurality of IC tags provided with different set times of day. Each IC tag includes a communication circuit, a control unit, a power source unit for supplying power from a battery to them, and time measuring means. Each IC tag performs transmission at each prescribed set time of day. This system also includes a detector for detecting the presence or absence of the IC tags based on the communication with them. The detector has a communication circuit, and determines the presence or absence of reception from them successively at the respective set times of day of the respective IC tags. Since the IC tag receives no inquiry from the detector, the IC tag can avoid useless reaction and battery consumption.

Japanese Laid-open Patent Application Publication JP 2001-251210-A published on September 14, 2001 describes a method of locking a frequency in a transmitter at each of two nodes in a full duplex link, without using a separate reference oscillator in each node. The method provides locking of transmission frequencies of both nodes in a full duplex link at the same time by utilizing information of a received frequency to tune carrier frequencies of the transmitters. The offset of the carrier frequency of the fist transmitter is detected as the offset of a second corresponding receiver. The second receiver shifts the carrier frequency of the second transmitter, in response to the detected offset, to inform the first transmitter about the detected offset. The first receiver uses the detected offset to correct the carrier frequency of the first transmitter.

PCT International Publication WO 01/17804-A1 published on March 15, 2001 describes a system for monitoring and for signaling by radio the pressure in pneumatic tires on motor vehicles. The system monitors and signals by radio a pressure or a change in pressure in pneumatic tires of wheels on vehicles. The system includes a receiver unit provided in or on the vehicle and associated with at least one antenna, and a unit arranged in the pneumatic tire for measuring, evaluating and transmitting tire pressure signals. The transmitting unit does not transmit the pressure signal, if the change in the pressure does not transcend a threshold.

In the system disclosed in WO 01/17804, independently of remaining power of a battery, a system transmits a signal only depending on whether a change in a measured value exceeds a threshold. Thus, when the remaining battery power runs out, the system suddenly stops its operation.

The inventors have recognized that a detection mode of operation of an RF ID tag with a battery can be changed in accordance with the remaining power of the battery, so that a run time of the battery can be extended and at least a minimum amount of data can be read out from the RF ID tag even when the remaining power of the battery is reduced to a lower level.

It is an object in one aspect of the present invention to provide an active-type information storage device which can change its mode of operation in accordance with its remaining battery power.

It is another object in another aspect of the invention to extend a battery run time of an active-type information storage device.

### SUMMARY

According to an aspect of the present invention, an active-type information storage device assessable from a reader and writer device includes: a memory which stores information including an identification; a timer which measures time; a battery which supplies electric power at least to the timer; a receiver unit which senses a carrier of an information request signal at a first frequency from the reader and writer device; a transmitter unit which modulates a carrier with data and transmits a response signal at a second frequency to the reader and writer device; and a control unit which controls the receiver unit and the transmitter unit. The active-type information storage device further includes: a sensor unit which detects a physical quantity or state and then holds corresponding detected data; a remaining power detector unit which detects a remaining power of the battery; and a power management unit which determines an operation mode for the sensor unit in accordance with the remaining power of the battery detected by the remaining power detector unit. In accordance with the determined operation mode, the control unit causes the receiver unit, the sensor unit or the remaining power detector unit to operate at a particular timing. In a sleep period of time which occurs intermittently, the control unit causes the transmitter unit, the receiver unit, the sensor unit, the memory and the remaining power detector unit to be in an inactive state. The power management unit causes the memory to store the detected data from the sensor unit that is determined in accordance with the determined operation mode. The control unit controls the receiver unit to sense a carrier of an RF signal at the first frequency in a carrier sensing period of time. When the receiver unit senses and detects a carrier of an RF signal at the first frequency in a particular carrier sensing period of time, the control unit causes the receiver unit to further receive an information request signal, and then in response to the received information request signal, causes the transmitter unit to transmit a response signal at the second frequency carrying the data in the memory.

Another aspect of the invention is related to a program which may be used for providing such a contactless information storage device.

According to the present invention, an active-type information storage device can change its mode of operation in accordance with its remaining battery power, and the active-type information storage device can extend its battery run time.

### BRIEF DESCRIPTION OF THE DRAWINGS

FIG. 1 illustrates configurations of an active-type RF ID tag as an active-type contactless information storage device and of a reader and writer device;
FIG. 2A illustrates a time chart of processing for transmission of an RF signal carrying a tag information request command transmitted by the reader and writer device, FIG. 2B illustrates a time chart of a receive ready state and of processing for reception of a received RF signal in the reader and writer device, and FIG. 2C illustrates an example of a time chart of carrier sensing, processing for reception of received RF signals, and processing for transmission of an RF signal carrying a response in the case of successful authentication, in the active-type RF ID tag;
FIG. 3 illustrates a flow chart for the processing performed by the reader and writer device;
FIGS. 4A and 4B illustrate a flow chart for the processing performed by the active-type RF ID tag;
FIG. 5 illustrates a configuration of an active-type RF ID tag as an active-type contactless information storage device, in accordance with a principle of the present invention;
FIGS. 6A to 6C illustrate time charts of detection or sensing, comparison, carrier sensing, processing for reception of received RF signals, and processing for transmission of an RF signal carrying a response, in the active-type RF ID tag, for respective different remaining powers of a battery;
FIG. 7 illustrates a configuration of an active-type RF ID tag as an active-type contactless information storage device, in accordance with to an embodiment of the invention;
FIG. 8 illustrates a table representing the relation between the comparison threshold and the detection mode of operation (ON/OFF), in accordance with the detected voltage of the battery;
FIGS. 9A to 9C illustrate a flow chart for the processing performed by the active-type RF ID tag;
FIG. 10 illustrates a configuration of an active-type RF ID tag as an active-type contactless information storage device, in accordance with another embodiment of the invention;
FIG. 11 illustrates a table representing the relation between the resolution of the detected values and the detection operation modes of the sensor as a thermal sensor and the operation modes of the RF ID tag, in accordance with the detected voltage of the battery; and
FIGS. 12A to 12C illustrate a flow chart for processing, which is executed by the active RF ID tag.

### DESCRIPTION OF PREFERRED EMBODIMENTS

Non-limiting preferred embodiments of the present invention will be described with reference to the accompanying drawings. Throughout the drawings, similar symbols and numerals indicate similar items and functions.

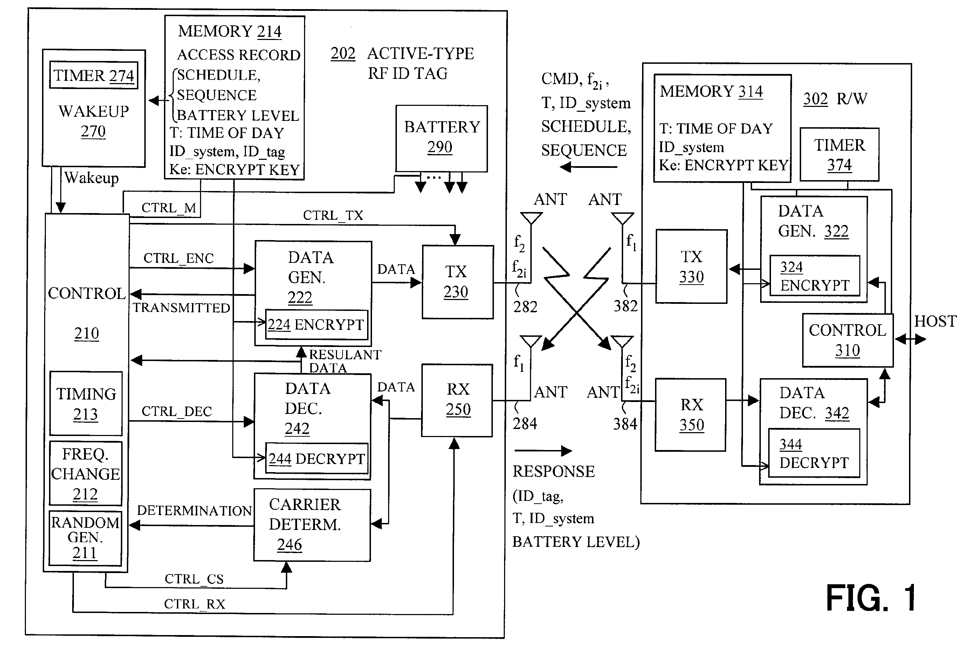

FIG. 1 illustrates configurations of an active-type RF ID tag 202 as an active-type contactless information storage device and of a reader and writer (R/W) device or reader/writer device 302. As an active-type contactless information storage device, a contactless IC card having a configuration similar to that of the active-type RF ID tag 202 may be used in place of the active-type RF ID tag 202. In FIG. 1, data transmitted between the RF ID tag 202 and the reader and writer device 302 is encrypted, and the transmitted data is received and decrypted for authentication. Alternatively, authentication may not be performed for the received data, and the transmitted data may not be encrypted.

The active-type RF ID tag 202 includes a control unit 210, a memory 214, a data generation unit 222, a transmitter unit (TX) 230, a receiver unit (RX) 250, a data decoding unit 242, a carrier determination unit 246, a wakeup unit 270, a transmitting antenna (ANT) 282, a receiving antenna (ANT) 284, and a battery 290. The data generation unit 222 encrypts data such as a tag ID (ID tag) stored in the memory 214, and encodes the encrypted data, to thereby generate encoded data. The transmitter unit (TX) 230 modulates a carrier with the encoded data of a baseband received from the data generation unit 222, and then transmits an RF signal at a frequency f₂ or RF signals at different frequencies f₂ᵢ (i = 1, 2,..., n). The receiver unit (RX) 250 receives and demodulates an RF signal at a frequency f₁, to thereby reproduce baseband encoded data, and also generates data indicative of the carrier intensity of the received RF signal. The data decoding unit 242 decodes the encoded data received from the receiver unit 250, and decrypts the decoded data to thereby generate decrypted data. The carrier determination unit 246 determines the presence or absence of a received RF signal carrier in accordance with the data indicative of the carrier intensity. The wakeup unit 270 generates a wakeup signal in accordance with a time control sequence, which has been set up beforehand. The transmitting antenna (ANT) 282 is coupled to the transmitter unit 230. The receiving antenna (ANT) 284 is coupled to the receiver unit 250. The battery 290 supplies power to the elements 210-270 and the like of the RF ID tag 202.

The frequencies f₁ and f₂ may be 300 MHz and 301 MHz, respectively, for example. The frequencies f₂ᵢ may be 301 MHz, 302 MHz,..., 305 MHz, for example. The transmission output power of the transmitter unit (TX) 230 may be one (1) mW, for example. Alternatively, the antennas 282 and 284 may be integrated into a single antenna.

The control unit 210 includes a random number generator 211, a frequency changing unit 212, and a timing unit 213. The random number generator 211 generates a random number for randomly selecting one of time slots for transmission. The frequency changing unit 212 changes the transmitting frequency f₂ᵢ. The timing unit 213 adjusts a timing for transmission.

The control unit 210 is constantly in an active state after power activation of the RF ID tag 202. The control unit 210 provides a memory control signal CTRL_M, a data generation control signal CTRL_ENC, and a transmission control signal CTRL_TX to the memory 214, the data generation unit 222, and the transmitter unit 230, respectively. The control unit 210 further provides a reception control signal CTRL_RX, and a data decoding control signal CTRL_DEC to the receiver unit 250, and the data decoding unit 242, respectively. The control unit 210 further provides a carrier determination control signal CTRL_CS and a wakeup unit control signal to the carrier determination unit 246, and the wakeup unit 270, respectively. The control unit 210 may be a microprocessor or microcomputer that operates in accordance with a program.

The memory 214 may store information, such as the tag ID (ID_tag) of the RF ID tag 202, a system ID (ID_system) and an encryption/decryption key Ke for authentication, the current time-of-day information T, and records of accesses performed by the reader and writer device 302. The memory 214 may store further information, such as a control schedule and a time control sequence of the wakeup unit 270, the current remaining power level of the battery 290, a cycle period Ts for sensing a carrier, a time period of processing for reception, and a time period of transmission. The memory 214 provides the current time-of-day information T, the system ID and the encryption/decryption key Ke to the data generation unit 222 and the data decoding unit 242. These pieces of information may be transmitted to the RF ID tag 202 by the reader and writer device 302 beforehand, and then written into the memory 214 by the control unit 210 beforehand. These pieces of information in the memory 214 may be stored and updated under the control of the control unit 210.

The data generation unit 222 includes an encryption unit 224, which encrypts the data to be transmitted, with the encryption key Ke stored in the memory 214 in accordance with a given cryptosystem. The data decoding unit 242 includes a decryption unit 244, which decrypts the received data with the encryption/decryption key Ke in accordance with the given cryptosystem. The system ID is indicative of a common ID shared by a group of the reader and writer device 302 and a plurality of RF ID tags including the RF ID tag 202. The common key cryptosystem is employed as the given cryptosystem herein. Alternatively, the public key cryptosystem may be employed.

The wakeup unit 270 includes a timer 274 which measures time and thereby generates a time of day. The wakeup unit 270 is constantly in an active state after the power activation of the RF ID tag 202. In accordance with the time of day of the timer 274 and with the control schedule and the time control sequence read out from the memory 214 and set up beforehand, the wakeup unit 270 provides a wakeup signal to the control unit 210 in a given cycle Ts for sensing a carrier, for example, of two seconds. The control unit 210 corrects the time of day of the timer 274 in accordance with the current time of day information T in the memory 214, and then writes and updates the current time of day T generated by the timer 274 in the memory 214.

The data generation unit 222 generates data in a given format including the tag ID (ID_tag) stored in the memory 214 and the like, encrypts the generated data in accordance with the given cryptosystem, then encodes the encrypted data in accordance with a given encoding scheme, and then provides the encoded data to the transmitter unit 230. The data may include the remaining battery power level and the access records.

The data decoding unit 242 decodes the received encoded data in accordance with the given encoding scheme, and decrypts the decoded data in accordance with the given cryptosystem. The data decoding unit 242 then provides the decrypted data to the data generation unit 222 and to the control unit 210.

The carrier determination unit 246 receives, from the receiver unit 250, the data indicative of the power intensity of the received RF signal carrier, and accordingly determines the presence or absence of a received carrier. The carrier determination unit 246 then provides the resultant determination to the control unit 210.

The reader and writer device 302 includes a control unit 310, a memory 314, a data generation unit 322, a transmitter unit (TX) 330, a receiver unit (RX) 350, a data decoding unit 342, a timer 374 which measures time and thereby generates a time of day, a transmitting antenna (ANT) 382, and a receiving antenna (ANT) 384. The control unit 310 transmits and receives data to and from a host computer (not shown). The data generation unit 322 generates data in a given format including a command (CMD) and the like received from the control unit 310. The data generation unit 322 then encrypts the generated data, and then encodes the encrypted data, to thereby generate encoded data. The transmitter unit (TX) 330 modulates the carrier with the encoded data of a baseband received from the data generation unit 322, and then transmits an RF signal at the frequency f₁. The receiver unit (RX) 350 receives an RF signal at a frequency f₂ or RF signals at frequencies f₂₁-f₂ₙ. The data decoding unit 342 decodes data received from the receiver unit 350 and decrypts the decoded data to thereby generate baseband decrypted data. The receiver unit 350 then provides the decrypted data to the control unit 310. The transmitting antenna (ANT) 382 is coupled to the transmitter unit 330. The receiving antenna (ANT) 384 is coupled to the receiver unit 350. The transmission output power of the transmitter unit (TX) 330 may be 100 mW, for example. Alternatively, the antennas 382 and 384 may be integrated into a single antenna.

The memory 314 of the reader and writer device 302 stores the current time-of-day information T for authentication, the system ID (ID_system) for authentication, and an encryption/decryption key Ke. The data generation unit 322 includes an encryption unit 324, which encrypts the data to be transmitted, with the encryption key Ke stored in the memory 314 in accordance with the given cryptosystem. The data decoding unit 342 includes a decryption unit 344, which decrypts the received data with the encryption/decryption key Ke in accordance with the given cryptosystem.

When the control unit 310 receives a command such as a tag ID or information request command (referred to simply as a tag information request command hereinafter) from the host computer, it provides data including the command to the data generation unit 322. The data may include the transmission frequency f₂ or f₂ᵢ to be used in the RF ID tag 202, the reference current time-of-day information T, and a control schedule and a time control sequence which are new or updated. The command may include an instruction of correcting or updating the time of the timer 274, in addition to the current time-of-day information T. Further, the command may include an instruction of correcting or updating the schedule or the sequence stored in the memory 214, in addition to the control schedule or the time control sequence which are new or updated.

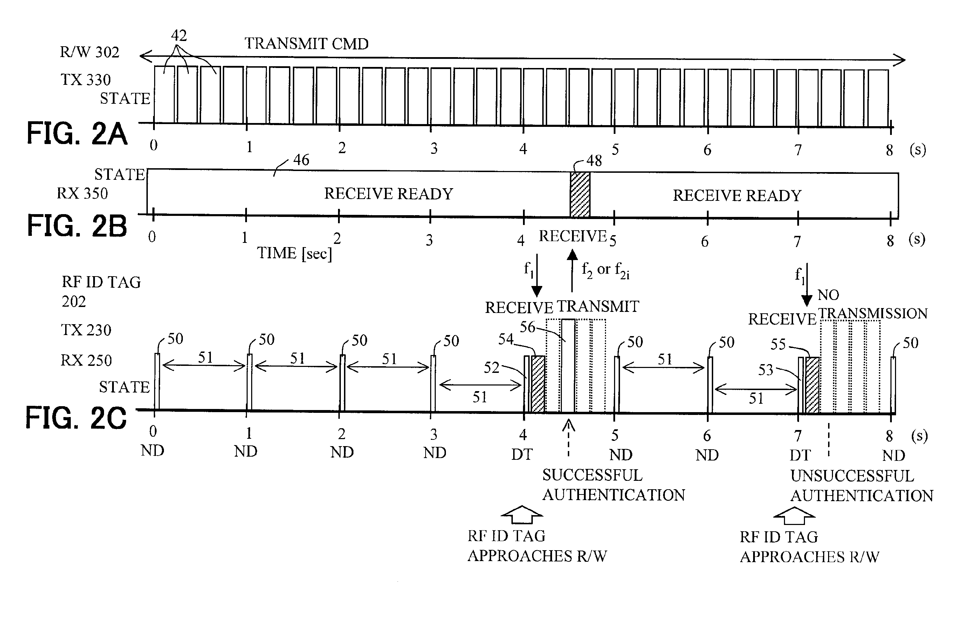

FIG. 2A illustrates a time chart of processing for transmission 42 for an RF signal carrying a tag information request command (CMD) transmitted from the reader and writer device 302. FIG. 2B illustrates a time chart of a receive ready state 46 and of processing for reception 48 of a received RF signal in the reader and writer device 302. FIG. 2C illustrates a time chart of carrier sensing 50, 52 and 53, processing for reception 54 and 55 of received RF signals, and processing for transmission 56 of an RF signal carrying a response in the case of successful authentication, in the active-type RF ID tag 202.

Referring to FIG. 2A, the data generation unit 322 of the reader and writer device 302 generates data including a tag information request command for the RF ID tag that is received from the control unit 310, encrypts the data in accordance with the given cryptosystem, and encodes the encrypted data in accordance with the given encoding scheme to thereby generate encoded encrypted data. The transmitter unit 330 cyclically transmits the RF signal carrying the command in the successive time slots at short intervals in the processing for transmission 42.

Referring to FIG. 2C, in the active-type RF ID tag 202, in response to a wakeup signal from the wakeup unit 274, the receiver unit 250 and the carrier determination unit 246 are enabled in the periods of time for carrier sensing 50 and 52 with a given duration, for example of approximately 1-10 ms, occurring in a particular cycle Ts, for example of two seconds. This causes the receiver unit 250 to enter into a receive ready state. Then the enabled carrier determination unit 246 determines the presence or absence of a received carrier, in accordance with the data received from the receiver unit 250 indicating the power intensity of the received RF signal carrier. When the RF ID tag 202 is not located near the reader and writer device 302, the carrier determination unit 246 detects no carrier (ND), and hence determines the absence of a carrier.

In a period of time 51 intervening between two adjacent carrier sensing time periods 50, the RF ID tag 202 enters into a sleep mode of operation, during which only the control unit 210 and the wakeup unit 270 are enabled or powered on, while the other elements 214-250 are disabled or powered down. The time length of the sleep period of time 51 may be shorter than the length of time between the ending time of a carrier sensing time period 50 and the starting time of the next carrier sensing time period 50.

When the RF ID tag 202 approaches the reader and writer device 302 so that the receiver unit 250 of the RF ID tag 202 receives an RF signal, the carrier determination unit 246 detects the carrier of the RF signal (DT) in the time period for carrier sensing 52, and hence determines the presence of a carrier.

In response to the resultant determination of the presence of a carrier, the receiver unit 250 and the data decoding unit 242 are enabled in the time period of the subsequent processing for reception 54 with a given duration, for example, of 100 ms.

The enabled receiver unit 250 receives and demodulates the RF signal to thereby reproduce encoded encrypted data including a command. The enabled data decoding unit 242 decodes the data in accordance with the given encoding scheme, then decrypts the decoded encrypted data with the encryption/decryption key Ke in accordance with the given cryptosystem, then obtains the command from the data, and then provides the command to the control unit 210.

The control unit 210 authenticates the reader and writer device 302 in accordance with the time-of-day information T and the system ID included in the command. When the authentication has been successful, the control unit 210 enables, in response to the command, the data generation unit 222 and the transmitter unit 230 in a time period or slot of processing for transmission 56 selected at random within a given period of time, each time slot having a given duration, for example, of 100 ms.

The enabled data generation unit 222 encrypts, with the encryption key Ke, data including desired information, such as the tag ID (ID_tag), the time-of-day information T, the system ID (ID_system) and the like retrieved from the memory 214, in accordance with the given cryptosystem, and then encodes the encrypted data in accordance with the given encoding scheme. The desired information may include other information, such as commodity contents of a package and the number and state of the content items, a sender, transportation, a route and a destination. The enabled transmitter unit 230 modulates the carrier with the encoded encrypted response data including the tag ID for transmitting the RF signal.

On the other hand, when the authentication has been unsuccessful, the processing is terminated without generating or transmitting the data.

Referring to FIG. 2B, the receiver unit 350 of the reader and writer device 302 is constantly in the receive ready state 46. When the RF ID tag 202 approaches the reader and writer device 302 so that the receiver unit 350 receives an RF signal, the receiver unit 350 demodulates the received RF signal in the time period of processing for reception 48, and then reproduces encoded encrypted data. The data decoding unit 342 decodes the encoded encrypted data in accordance with the given encoding scheme, then decrypts the decoded encrypted data with the encryption/decryption key Ke in accordance with the given cryptosystem to thereby reproduce the response data including the tag ID, and then provides the reproduced response to the control unit 310. In response to the received and reproduced response, the control unit 310 authenticates the RF ID tag 202 in accordance with the time-of-day information T and the system ID included in the response, and then provides the tag ID to the host computer. The host computer processes the tag ID for use in monitoring and managing the article distribution or the persons.

In general, the total time during which the RF ID tag 202 is not located near the reader and writer device 302 is much longer than the time during which the RF ID tag 202 is located near the reader and writer device 302. Thus, the active-type RF ID tag 202 is in a sleep mode of operation for the most period of time. This significantly reduces the power consumption of the active-type RF ID tag 202, and hence significantly increases the run time of the battery 290.

In general, when the reader and writer device 302 and the RF ID tag 202 encrypt the data to be transmitted and perform mutual authentication in accordance with the time-of-day information T and the system ID, the data transmitted by the reader and writer device 302 and the RF ID tag 202, which may be intercepted by a third party, has little risk of being used improperly. This enhances the security of the reader and writer device 302 and the RF ID tag 202.

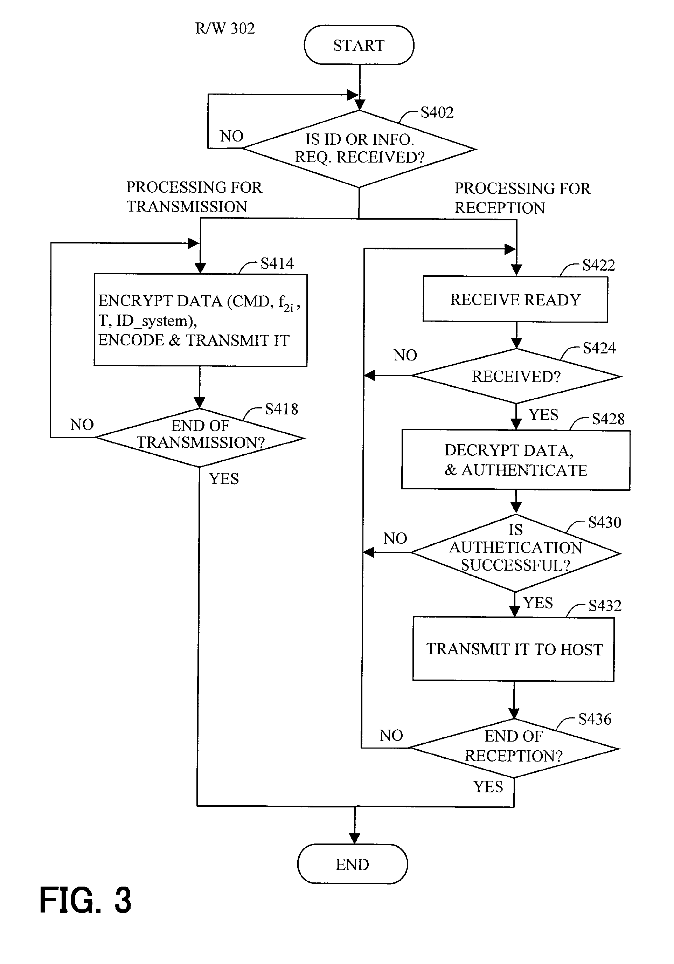

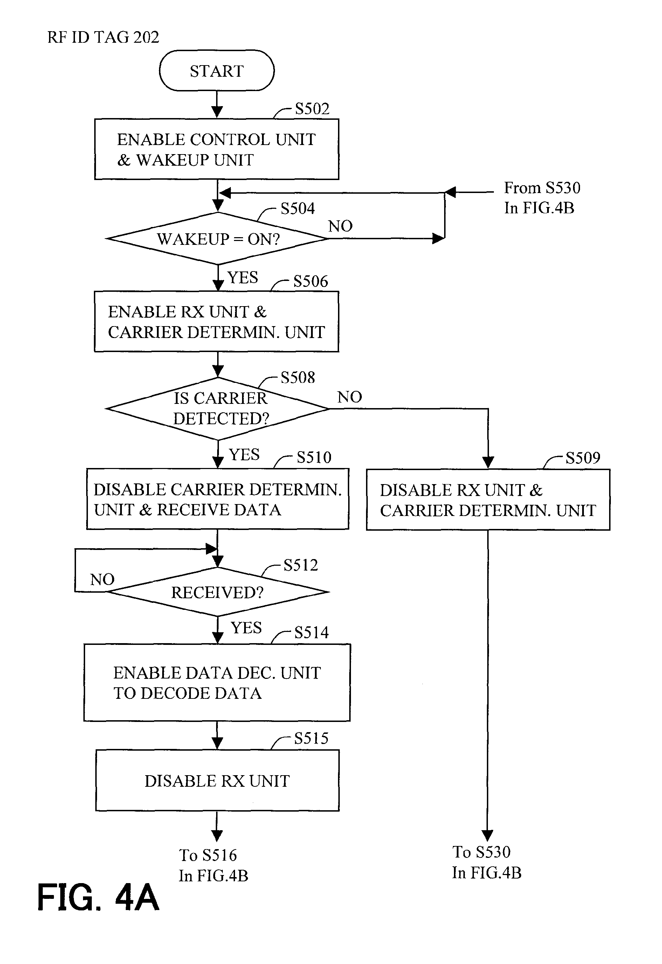

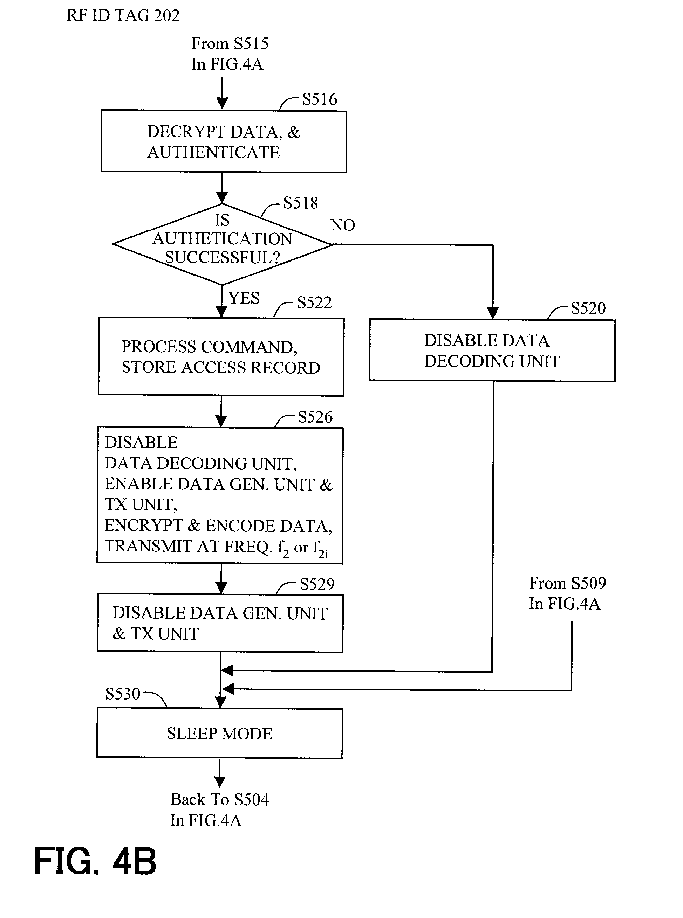

FIG. 3 illustrates a flow chart for the processing performed by the reader and writer device 302. FIGS. 4A and 4B illustrate a flow chart for the processing performed by the active-type RF ID tag 202.

Referring to FIG. 3, at Step 402, the control unit 310 of the reader and writer device 302 determines whether a tag ID or information request command received from the host computer has been detected. Step 402 is repeated until a tag ID or information request command is detected. When a tag ID or information request command is detected, the procedure proceeds to Step 414 for processing for transmission and to Step 422 for processing for reception.

At Step 414, the control unit 310 provides the tag information request command and the related information to the data generation unit 322. The data generation unit 322 encrypts data including the tag information request command received from the control unit 310 and including the current time-of-day information T and the system ID (ID_system) retrieved from the memory 314, with the encryption key Ke retrieved from the memory 314 in accordance with a given cryptosystem. The given cryptosystem may be the DES (Data Description Standard), the Triple DES or the AES (Advanced Encryption Standard), for example. The data generation unit 322 then encodes the encrypted data in accordance with a given encoding scheme, such as the NRZ (Non-Return-to-Zero) encoding system or the Manchester encoding system. In the time period of processing for transmission 42, the transmitter unit 330 modulates the carrier with the encoded data of FIG. 2A, and then transmits the RF signal at a frequency f₁.

The control unit 310 may incorporate, into the tag information request command, data for specifying the transmission frequency f₂ or the variable transmission frequencies f₂ᵢ used for a response to the tag information request command, and data indicative of time of day or time slots to be used for the variable transmission frequencies f₂ᵢ as well as data indicative of the current time of day T, and a control schedule and a time control sequence.

The reader and writer device 302 may change the frequencies f₂ᵢ in a time division manner, selecting one of the frequencies for every set of commands in respective transmission cycles t_{RW-CY}, (the number of which may correspond, for example, to the time length of one or more cycles for sensing a carrier). This reduces the probability of collision between response RF signals transmitted from a plurality of RF ID tags which simultaneously approach the reader and writer device 302. This increases the number of RF ID tags that the reader and writer device 302 can simultaneously identify.

At Step 418, the control unit 210 determines whether the processing for data transmission is to be terminated. If it is determined that the data transmission is to be terminated, the procedure exits this routine. If it is determined that the processing for data transmission is to be continued, the procedure returns to Step 414. In FIG. 2A, the data transmission is repeated and continued.

Referring to FIG. 4A, at Step 502, when the RF ID tag 202 is activated, the control unit 210 and the wakeup unit 270 are enabled. Once the RF ID tag 202 is activated, the control unit 210 and the wakeup unit 270 are constantly enabled, and hence in an active state. In accordance with the timer 274 and with the time control sequence, the wakeup unit 270 provides the control unit 210 with a wakeup signal indicative of the timing for carrier sensing of a received RF signal in a given cycle Ts. At Step 504, the control unit 210 determines whether the wakeup signal received from the wakeup unit 270 indicates an ON state. The control unit 210 repeats the Step 504 until the wakeup signal goes to the ON state.

If it is determined at Step 504 that the wakeup signal indicates the ON state, then the control unit 210 at Step 506 enables the receiver unit 250 and the carrier determination unit 246 for a time period with a short duration, for example, of approximately 1-10 ms. Then, the enabled receiver unit 250 enters into the state of being ready to receive an RF signal. In accordance with the data received from the receiver unit 250 that is indicative of the received carrier power, the enabled carrier determination unit 246 determines the presence or absence of a received RF signal carrier, and then provides the resultant determination to the control unit 210. At Step 508, in accordance with the resultant determination, the control unit 210 determines whether a carrier is detected. If it is determined that no carrier is detected, the control unit 210 at Step 509 disables the receiver unit 250 and carrier determination unit 246. After that, the procedure proceeds to Step 530.

If it is determined at Step 508 that a carrier is detected, then the control unit 210 at Step 510 disables carrier determination unit 246 and continues to enable the receiver unit 250 in a further given duration, for example of 100-200 ms, to receive an RF signal at a frequency f₁ carrying a command from the reader and writer device 302 (reception 54 in FIG. 2C), and then demodulates the received RF signal. At Step 512, the control unit 210 determines whether the receiver unit 250 has received the RF signal. The Step 512 is repeated until the reception of the RF signal is completed.

If it is determined at Step 512 that the RF signal has been received, then the control unit 210 at Step 514 enables the data decoding unit 242. The enabled data decoding unit 242 receives the received data from the receiver unit 250 under the control of the control unit 210, and then decodes the data in accordance with the given encoding scheme. At Step 515, the control unit 210 disables the receiver unit 250.

Referring to FIG. 4B, at Step 516, under the control of the control unit 210, the data decoding unit 242 decrypts the decoded data with the encryption/decryption key Ke retrieved from the memory 214 in accordance with the given cryptosystem, and then provides the decrypted data including the command, the tag ID (ID_tag), the time-of-day information T, and the system ID (ID_system) to the control unit 210. The data may include a control schedule and a time control sequence. Upon receiving the data, the control unit 210 compares the decrypted time-of-day T and system ID with the stored time-of-day T and system ID in the memory 214, to determine whether the decrypted time information and ID match with the stored time information and ID, in order to authenticate the reader and writer device 302.

At Step 518, the control unit 210 determines whether the authentication has been successful. If it is determined that the authentication has been unsuccessful, the control unit 210 at Step 520 disables the data decoding unit 242. Then, the procedure proceeds to Step 530.

If it is determined at Step 518 that the authentication has been successful, the control unit 210 at Step 522 receives the decrypted decoded data including the tag information request command from the data decoding unit 242, then processes the received command included in the decrypted data, and then stores into the memory 214 the record of access performed by the reader and writer device 302.

When a time correction command and the current time-of-day information T are included in the received data, the control unit 210 corrects or updates the time of the timer 274 of the wakeup unit 270 into the time T.

At Step 526, in accordance with the tag information request command, the control unit 210 enables the data generation unit 222 and the transmitter unit 230 in a time slot selected at random in accordance with a random number from a given number of time slots within a given period of time. This selected time slot corresponds to the time period of the processing for transmission 56 of FIG. 2C.

The data generation unit 222 encrypts data including the tag ID (ID_tag) of the RF LID tag 202, the time-of-day information T, and the system ID (ID_system) read out from the memory 214, with the encryption key Ke in accordance with the given cryptosystem. The data generation unit 222 then encodes the encrypted data in accordance with the given encoding scheme, and then provides the encoded encrypted data to the transmitter unit 230.

The enabled transmitter unit 230 modulates the carrier with the encoded encrypted data, and then transmits the RF signal at a frequency f₂ or f₂ᵢ via the antenna 284 (transmission 56 in FIG. 2C). The frequency f₂ᵢ is changed by the frequency changing unit 212 of the control unit 210. The timing unit 213 adjusts a plurality of successive cycle time slots to occur in a given cycle.

At Step 529, the control unit 210 disables the data generation unit 222 and the transmitter unit 230. At Step 530, the control unit 210 causes the RF ID tag 202 to enter into the sleep mode of operation. In the sleep mode of operation, basically, only the control unit 210 and the wakeup unit 270 continue to stay in the enabled state, while the other elements 214-250 are disabled.

Referring back to FIG. 3, at Step 422, the control unit 310 enables the receiver unit 350 to enter into the receive ready state. The receiver unit 350 waits for the reception of an RF signal at a frequency f₂ (receive ready 46), and then receives an RF signal (processing for reception 48). At Step 424, the control unit 310 determines whether the receiver unit 350 has received the RF signal. Steps 424-424 are repeated until the reception is completed. If it is determined that the RF signal has been received, the procedure proceeds to Step 428.

At Step 428, the receiver unit 350 provides the received data to the data decoding unit 342. The data decoding unit 342 decodes the received data in accordance with the given encoding scheme, then decrypts the decoded data in accordance with the given cryptosystem, and then provides the determination of data reception and the decrypted data to the control unit 310. The control unit 310 compares the decrypted time T and system ID with the stored time T and system ID in the memory 314, to determine whether the decrypted time information and ID match with the stored time information and ID, in order to authenticate the RF ID tag 202. Even if there is an error between the received time-of-day information T and the stored time-of-day information T that falls within a tolerable range (e.g., ±0.5 seconds) in the control unit 210 of the RF ID tag 202 and in the control unit 310 of the reader and writer device 302, they may determine that the received time-of-day information matches with the stored time-of-day information.

At Step 430, the control unit 310 determines whether the authentication has been successful. If it is determined that the authentication has been unsuccessful, the procedure returns to Step 422. If it is determined that the authentication has been successful, the procedure proceeds to Step 432.

At Step 433, the control unit 310 transmits the decoded data to the host computer. At Step 436, the control unit 310 determines whether the data receive ready state is to be terminated. If it is determined that the data receive ready state is to be terminated, the procedure exits the routine of FIG. 3. If it is determined that the data receive ready state is to be continued, the procedure returns to Step 422. In FIG. 2B, the data receive ready state is repeated and continued.

Thus, the reader and writer device 302 transmits the RF signal cyclically at sufficiently short intervals, and is constantly in the ready state to receive the RF signal. This significantly reduces the carrier sensing time of the RF ID tag 202. Thus, when the transmission and reception take place only several times a day, for example, for entry and exit control, the most operating time is used for carrier sensing, and hence the entire power consumption of the RF ID tag 202 can be reduced significantly.

In a control schedule stored in the memory 214, the holidays and a period of time between a time point and another time point in the night-time (e.g., 6:00 pm to 6:00 am) of the weekdays may be specified, while a period of time between a time point and another time point in the daytime (e.g., 6:00 am to 6:00 pm) of the weekdays may be specified. In this case, the wakeup unit 270 generates no wakeup signal on the holidays and in the night-time, i.e., the RF ID tag 202 is in a sleep mode of operation, and does not perform carrier sensing at all. In contrast, it performs carrier sensing in a given cycle (e.g., of one second) in the daytime of the weekdays.

Under the control of the control unit 210, the wakeup unit 270 may generate a wakeup signal depending on the remaining power level P of the battery 290 stored in the memory 214. In this case, when the remaining battery power level P is sufficiently high, the carrier sensing may be performed in a relatively short cycle (e.g., of one second). On the other hand, when the remaining battery power level P goes below a threshold Pth, the carrier sensing may be performed in a relatively long cycle (e.g., of two seconds). Further, data representative of the remaining battery power level P may be incorporated into the response data of the RF ID tag 202, and then provided to the host computer via the reader and writer device 302, so that the host computer displays a warning of battery run-out to a user.

When the records of accesses performed by the reader and writer devices are stored as a log of accesses in the memory 214 as described above, even an unauthorized access performed by a reader and writer device other than the reader and writer device 302 can be recorded as the log. Thus, when the log of accesses is read by the reader and writer device 302 and then analyzed by the host computer, the unauthorized access can be recognized.

The configurations and operations of the active-type RF ID tag 202 and the reader and writer device 302 described above are partly disclosed in the US Patent Application Publication No. 2006/276206-A1 (which corresponds to Japanese Laid-open Patent Application Publication No. JP 2006-338489-A), the entirety of which is incorporated herein by reference.

An active-type RF ID tag may have a detector or sensor, which detects or senses a physical quantity or physical state in its ambient environment, and may store records of the detected quantity values or states. A reader and writer device can read the RF ID tag and collect data of such physical quantity values or states together with a tag ID of the RF ID tag. The RF ID tag may be adapted to skip recording current detected data which has a small difference from a previously recorded detected data, which difference is below or within a difference threshold, so that the power necessary to record the data can be reduced, the battery run time can be extended, and the memory capacity desired for recording the data can be reduced.

The active-type RF ID tag 202 of FIGS. 1 through 4B may be provided with a detector or sensor, and store records of data of values detected by the detector or sensor. In this case, it may be contemplated that the wakeup unit 270 may generate a wakeup signal in a given cycle and, in response, the detector or sensor may be temporally enabled to detect a value, data of which may be stored into the memory 214 in the cycle. A large amount of the detected data stored in the memory 214 over a long period of time can be read out by the reader and writer device 302 at a later time.

When the cycle period of generating a wakeup signal is sufficiently long (e.g., one hour), the desired memory capacity may be small and the power consumption may be low. In contrast, when the cycle period of generating a wakeup signal is short (e.g., one second), the desired memory capacity may be large and the power consumption may be high. In order to reduce the desired memory capacity and the power consumption, the active-type RF ID tag may be inhibited from storing into the memory the current detected value, the difference of which from the previous detected value does not exceed a threshold, as disclosed in International Publication WO 01/17804 described above. However, when the active-type RF ID tag runs short of the remaining battery power, it suddenly stops not only the function of sensing but also the primary function of transmitting its tag ID.

The inventors have recognized that an RF ID tag may be adapted to reduce the performance of the function of sensing as the remaining battery power decreases, so that the operation time of the minimum desired function or functions of the active-type RF ID tag is extended.

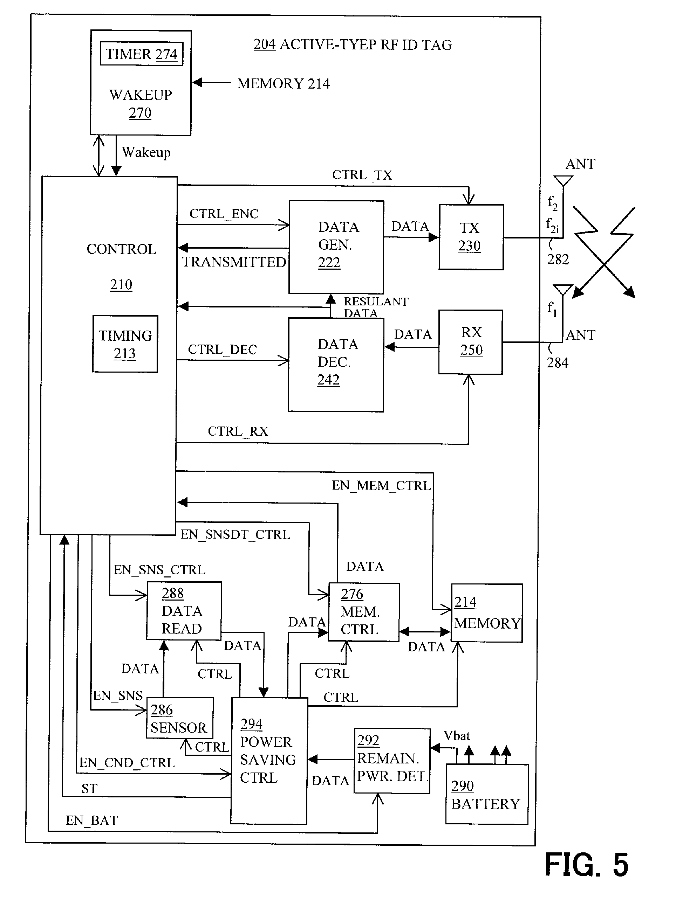

FIG. 5 illustrates a configuration of an active-type RF ID tag 204 as an active-type contactless information storage device, in accordance with a principle of the present invention. The reader and writer device 302 of FIG. 1 may be used to read information in the RF ID tag 204.

The RF ID tag 204 includes a memory control unit 276, a sensor 286, a detected-data read unit 288 for the sensor 286, a remaining power detector unit 292 for the battery 290, and a power saving control or power management unit 294, in addition to the elements 210 to 213, 222 to 274, 282, 284 and 290 of the RF ID tag 202 of FIG. 1. The detected-data read unit 288 acquires the value detected or sensed by the sensor 286 and holds the data of the detected value. The other elements of the RF ID tag 204 are similar to those of the RF ID tag 202 of FIG. 1. The battery 290 supplies power to the elements 210-270, 286, 288, 292, 294 and the like of the RF ID tag 204.

The elements 222-246, 270, 276, 288 and 292-294 may be implemented in the form of hardware, as separate circuits or as a part of the control unit 210. Alternatively, at least a part of the elements 222-246, 270, 276, 288 and 292-294 may be implemented in the form of software, as functions of the control unit 210 which operate in accordance with programs stored in a memory (214).

In accordance with a determined or set operation state or mode ST of the RF ID tag 204 from the power saving control unit 294 and in response to a wakeup signal from the wakeup unit 270, the control unit 210 provides control signals EN_MEM_CTRL, EN_SNSDT_CTRL, and EN_BAT, for enabling and disabling the memory 214, the memory control unit 276, and the remaining power detector unit 292, respectively. In accordance with the determined operation state or mode ST and in response to the wakeup signal, the control unit 210 further provides control signals EN_CND_CTRL, EN_SNS, and EN_SNS_CTRL, for enabling and disabling the power saving control unit 294, the sensor 286, and the detected-data reading unit 288, respectively.

Under the control of the control unit 210, the remaining power detector unit 292 detects the value of the supply voltage Vbat of the battery 290 at a regular or cyclic timing to thereby determine the current remaining power P. The remaining power detector unit 292 then provides the data DATA indicative of the remaining power P of the battery 290 to the power saving control unit 294. The data indicative of the remaining power P may be the detected supply voltage Vbat. In accordance with the current remaining power P of the battery 290, the power saving control unit 294 provides a control signal CTRL to the sensor 286 and the detected-data read unit 288, and then reads the detected value data DATA of the sensor 286 from the detected-data read unit 288. The power saving control unit 294 then provides to the control unit 210 an operation state or operation mode ST for power saving determined by the power saving control unit 294.

The power saving control unit 294 causes the memory control unit 276 to store into the memory 214 the desired detected data DATA having a detection precision or fineness determined in accordance with the operation state or operation mode ST. A higher detection precision or fineness of the detected data causes higher power consumption for detection and storage of the data. Further, the power saving control unit 294 may cause the memory control unit 276 to store into the memory 214 the data DATA indicative of the remaining power P.

In response to a tag information request command CMD from the reader/writer device 302, the control unit 210 controls the memory control unit 276 to read out a file of stored data DATA of the detected values which has been accumulatively stored in the memory 214. Other elements and operation of the RF ID tag 204 are similar to those of the RF ID tag 202 of FIG. 1.

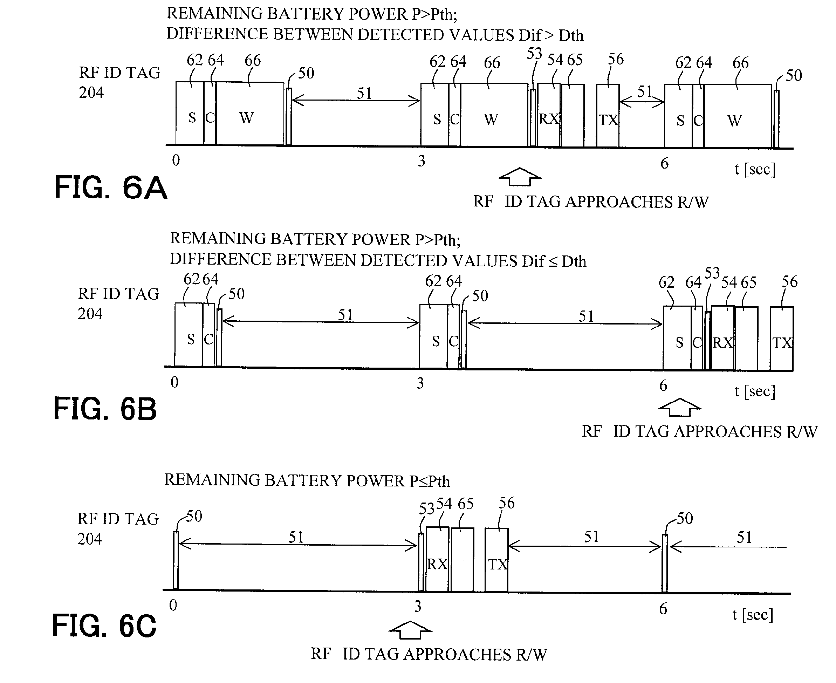

FIGS. 6A to 6C illustrate time charts of detection or sensing 62 of a physical quantity or state, comparison 64, carrier sensing 50 and 53, processing for reception 54 of received RF signals, and processing for transmission 56 of an RF signal carrying a response, in the active-type RF ID tag 204, for respective different remaining powers P of the battery 290.

In the RF ID tag 204, in response to the wakeup signal from the wakeup unit 270 and in accordance with the operation mode ST, the control unit 210 initially enables either the thermal sensor 286 and the detected-data reading unit 288, or the receiver unit 250 and the carrier determination unit 246, or the remaining power detector unit 292 and the power saving control unit 294. In accordance with the current remaining power P of the battery 290 detected by the remaining power detector unit 292, the power saving control unit 294 determines the operation mode, and then provides to the control unit 210 the state information indicative of the operation mode ST. In accordance with the operation mode, the control unit 210 enables or disables the sensor 286, the detected-data read unit 288, the memory control unit 276 and the memory 214.

If the remaining power P is sufficient and exceeds a highest, first threshold Pth1 (P > Pth1), then the power saving control unit 294 acquires from the detected-data read unit 288 the detected value that has the highest precision or fineness available in the sensor 286 which may need a high power consumption, and then stores data of the value into the memory 214.

If the remaining power P is lower than or equal to the first threshold Pth1 but exceeds a second threshold Pth2 (Pth1 ≥ P > Pth2), then the power saving control unit 294 acquires from the detected-data read unit 288 the detected value having a lower precision or fineness available in the sensor 286 which may need a lower power consumption, and then stores data of the value into the memory 214. The control unit 210 enables the cyclic carrier sensing 50 and 53. In response to reception of a tag information request command transmitted by the reader/writer device 302, the control unit 210 enables the transmission of a file of the detected value data and the tag ID back to the reader/writer device 302.

If the remaining power P is lower than or equal to the second threshold Pth2 but exceeds a third threshold Pth3 (Pth2 ≥ P > Pth3), then the control unit 210 disables the sensor 286 from the detecting to thereby reduce the power consumption. Then, the control unit 210 enables the cyclic carrier sensing alone, and enables the transmission of a file of detected data and the tag ID in response to a tag information request command from the reader and writer device 302.

If the remaining power P does not exceed the third threshold Pth3 (P ≤ Pth3), the control unit 210 disables the sensor 286 from the detecting. Then, the control unit 210 enables the cyclic carrier sensing alone, and enables the transmission of the tag ID alone in response to a tag information request command from the reader and writer device 302, to thereby reduce the power consumption. Thus, even if the remaining power P is low, the tag ID alone can be transmitted as long as possible. Then, the transmission of the tag ID alone indicates the necessity of replacement or charging of the battery.

Referring to FIG. 6A, if the remaining power P is sufficient and exceeds the threshold Pth (P > Pth), then the power saving control unit 294 of the RF ID tag 204, in the period of time 62, controls the sensor 286 to detect a value Dc of a physical quantity, such as an ambient temperature, or a physical state (S), and controls the detected-data reading unit 288 to read current data of the detected value Dc. In the period of time 64, the power saving control unit 294 then compares an absolute difference Dif between the current data of the detected value Dc and the previously stored data of the detected value Ds (Dif = |Dc - Ds|) with a particular threshold value (Dth) (C). If the absolute difference Dif transcends the threshold value (Dif > Dth), then, in the period of time 66, the power saving control unit 294 controls the memory control unit 276 to write the current detected value Dc into the memory 214 (W) to hold the detected value Dc as a new stored value Ds. Then the RF ID tag 204 performs carrier sensing in the periods of time 50 and 53.

Referring to FIG. 6B, if the current detected data Dc does not transcend the previous detected data Ds (i.e., Dif ≤ Dth), the power saving control unit 294 inhibits the detected value Dc to be written into the memory 214, whereby the power consumption for storing data and the desired memory capacity of the memory 214 can be reduced. Then the RF ID tag 204 performs the carrier sensing in the periods of time 50 and 53.

Referring to FIG. 6C, if the remaining power P of the battery 290 of the RF ID tag 204 is lower than the threshold Pth (P < Pth), the sensor 286 and the detected-data read unit 288 are kept disabled. The RF ID tag 204 performs the carrier sensing in the periods of time 50 and 53.

Referring to FIGS. 6A to 6C, in response to detection of a carrier of an RF signal transmitted by the reader/writer device 302 in the carrier sensing period of time 53, the RF ID tag 204 further receives the transmitted RF signal. In response to the tag information request command carried by the transmitted RF signal, the control unit 210 provides the control signals EN SNSDT CTRL and EN MEM CTRL to enable the memory control unit 276 and the memory 214 respectively, and reads out the file of data of the stored detected values in the memory 214 together with the tag ID, and causes the read data file to be transmitted back to the reader/writer device 302.

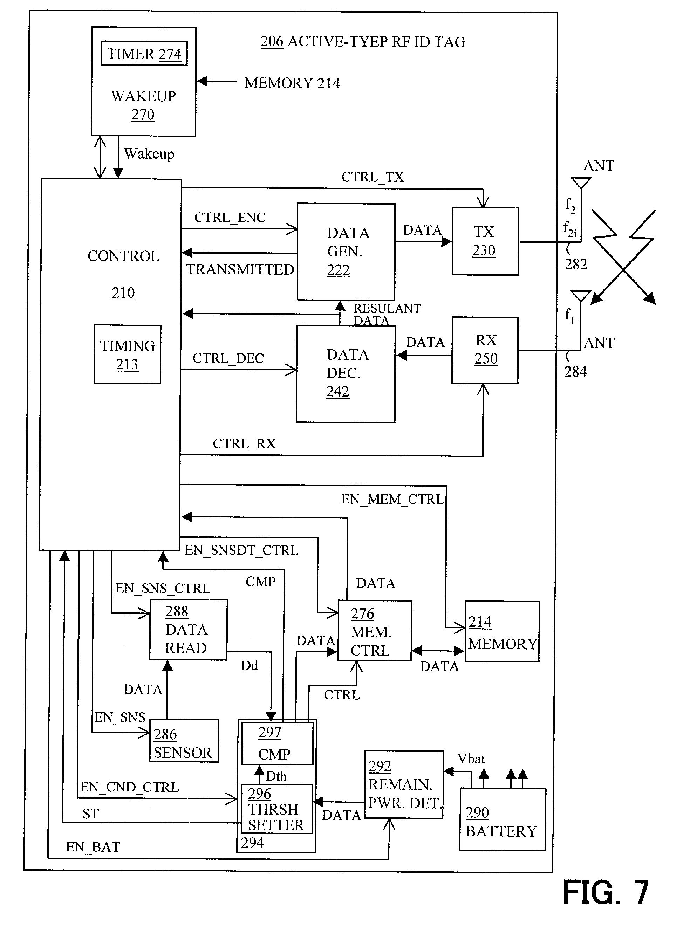

FIG. 7 illustrates a configuration of an active-type RF ID tag 206 as an active-type contactless information storage device, in accordance with to an embodiment of the invention. The reader and writer device 302 of FIG. 1 may be used to read information in the RF ID tag 206. In this case, the power saving control unit 294 includes a threshold setter unit 296 and a comparator unit 297. The other elements of the RF ID tag 206 are similar to those of the RF ID tag 204 of FIG. 5.

The threshold setter unit 296 and the comparator unit 297 are enabled by a control signal EN_CND_CTRL from the control unit 210. The enabled threshold setter unit 296 processes data of the remaining power P of the battery 290 provided by the remaining power detector unit 292, and thereby determines a detection mode of operation and a threshold Dth in accordance with the remaining power P. The threshold setter unit 296 then provides the state ST of the detection operation mode to the control unit 210, and the threshold Dth to the comparator unit 297. The comparator unit 297 operates to compare the detected data Dd of the sensor 286 retrieved from the detected-data read unit 288 with the threshold Dth, then provides the control unit 210 with the comparison result such as a request or non-request for data storage to thereby cause the memory control unit 276 to store the desired detected data Dd into the memory 214. For this purpose, the control unit 210 provides control signals EN_SNSDT_CTRL and the like to temporarily enable the memory control unit 276 and the memory 214. The memory control unit 276 stores into the memory 214 the desired detected data together with the current date and time-of-day information.

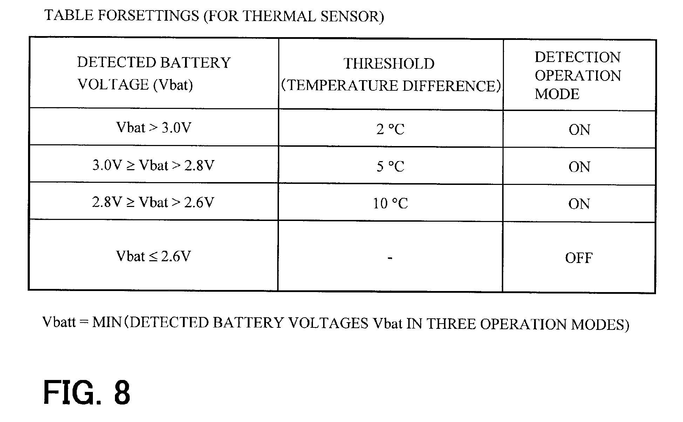

FIG. 8 illustrates a table representing the relation between the comparison threshold Dth and the detection mode of operation (ON/OFF), in accordance with the detected voltage Vbat of the battery 290. In this case, it is assumed that the RF ID tag 206 is used for managing routes, dates and time-of-day information of transportation of a refrigerated transport container for example, and also for tracing the change of the temperature inside the container. The sensor 286 is a thermal sensor to be enabled depending on the remaining power P of the battery 290.

If the detected voltage Vbat indicative of the remaining power P of the battery 290 is sufficiently high and exceeds 3.0 V (Vbat > 3.0 V), then the threshold setter unit 296 sets the detection mode of operation into an ON state, and then sets the threshold Dth for the temperature difference Dif between the current detected temperature and the previous stored detected temperature to be a value of 2°C.

If the detected voltage Vbat has a lower value and falls within a range higher than 2.8 V and not higher than 3.0 V (3.0 V ≥ Vbat > 2.8 V), then the threshold setter unit 296 sets the detection mode of operation into an ON state, and then sets the threshold Dth for the temperature difference Dif between the current detected temperature and the previous stored detected temperature to be a higher value of 5°C.

If the detected voltage Vbat has a lower value and falls within a range higher than 2.6 V and not higher than 2.8 V (2.8 V ≥ Vbat > 2.6 V), then the threshold setter unit 296 sets the detection mode of operation into an ON state, and then sets the threshold Dth for the temperature difference Dif between the current detected temperature and the previous stored detected temperature to be a yet higher value of 10°C.

If the detected voltage Vbat has a yet lower value and is not higher than 2.6 V (Vbat ≤ 2.6 V), then the threshold setter unit 296 sets the detection mode of operation into an OFF state and does not set up the threshold Dth.

A higher threshold Dth may reduce a number of pieces of detected data to be stored, and hence may reduce the power consumption for data storage. When the sensor 286 is disabled from the detecting, then the sensor 286, the detected-data read unit 288, the comparator unit 297, the memory control unit 276 and the memory 214 do not operate, and hence power consumption is reduced.

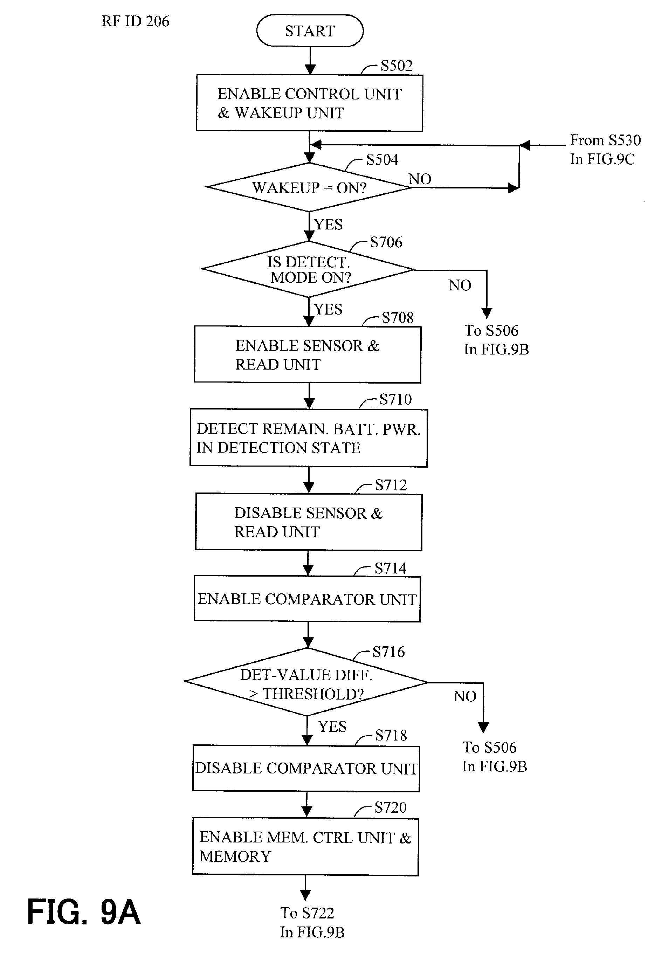

FIGS. 9A to 9C illustrate a flow chart for processing which is executed by the active-type RF ID tag 206. In FIGS. 9A to 9C, the steps of the processing for authentication of FIGS. 4A and 4B are not indicated for simplicity.

Referring to FIG. 9A, Steps 502-504 are similar to those of FIG. 4A.

At Step 706, the control unit 210 determines whether the detection mode of operation of the RF ID tag 206 is an ON state. If it is determined that the detection mode of operation is not an ON state, the procedure goes to Step 506. If it is determined that the detection mode of operation is an ON state, the control unit 210 at Step 708 enables the sensor 286 to detect the temperature, and enables the detected-data read unit 288 to read the detected value.

At Step 710, the control unit 210 enables the remaining power detector unit 292 and the threshold setter unit 296, then causes the remaining power detector unit 292 to detect the remaining power P corresponding to the detected voltage Vbat of the battery 290 in the detecting state and provide the data of the detected remaining power to the threshold setter unit 296, and then disables the remaining power detector unit 292. At Step 712, the control unit 210 disables the sensor 286 and the detected-data read unit 288.

At Step 714, the control unit 210 enables the comparator unit 297. At Step 716, the comparator unit 297 compares the absolute difference Dif between the current detected temperature value Dc and the previous stored detected temperature value Ds with the preset threshold Dth, to thereby determine whether the absolute difference Dif exceeds the threshold Dth. If it is determined that the absolute difference Dif does not exceed the threshold Dth, the procedure goes to Step 506. If it is determined that the absolute difference Dif exceeds the threshold Dth, the comparator unit 297 at Step 718 holds the current detected temperature value Dc as a stored detected temperature value Ds. Then, the control unit 210 disables the comparator unit 297. At Step 720, the control unit 210 enables the memory control unit 276 and the memory 214.

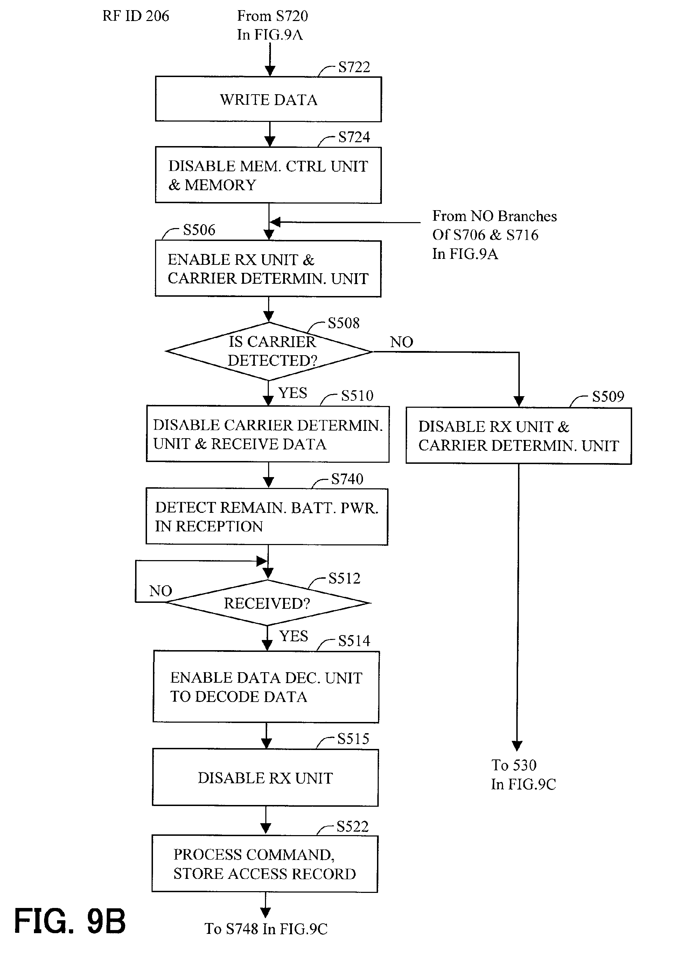

Referring to FIG. 9B, at Step 722, the control unit 210 temporarily enables the comparator unit 297. Then, the memory control unit 276 stores into the memory 214 the current detected temperature value Dc retrieved from the comparator unit 297, i.e. the stored detected temperature value Ds. At Step 724, the control unit 210 disables the memory control unit 276 and the memory 214.

Steps 506 to 510 are similar to those of FIG. 4A.

At Step 740, the control unit 210 enables the remaining power detector unit 292 and the threshold setter unit 296, then causes the remaining power detector unit 292 to detect the remaining power P corresponding to the detected voltage Vbat of the battery 290 in the receiving state and provide the data of the detected remaining power to the threshold setter unit 296, and then disables the remaining power detector unit 292.

Steps 512 to 522 are similar to those of FIG. 4A.

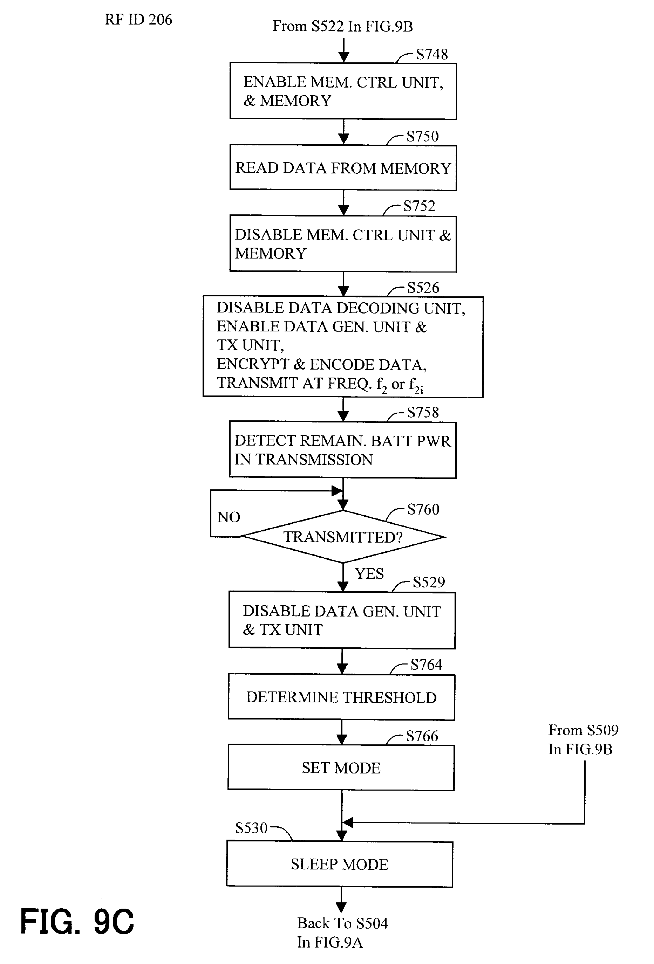

Referring to FIG. 9C, at Step 748, in response to the information request command, the control unit 210 enables the memory control unit 276 and the memory 214. At Step 750, the memory control unit 276 reads out of the memory 214 a file of stored data of a plurality of detected temperature values having been recorded over a period of time, and then provides the read data file to the control unit 210. At Step 752, the control unit 210 disables the memory control unit 276 and the memory 214.

Step 526 is similar to that of FIG. 4B. The control unit 210 further causes the file of stored data of detected temperature values to be encrypted and encoded and then transmitted to the reader and writer device 302.

At Step 758, the control unit 210 enables the remaining power detector unit 292 and the threshold setter unit 296, then causes the remaining power detector unit 292 to detect the remaining power P corresponding to the detected voltage Vbat of the battery 290 in the transmitting state and provide the data of the detected remaining power to the threshold setter unit 296. The control unit 210 then disables the remaining power detector unit 292 and the threshold setter unit 296.

At Step 760, the control unit 210 determines whether the transmission is completed. Step 760 is repeated until the transmission is completed. If it is determined that the transmission is completed, the procedure goes to Step 529. Step 529 is similar to that of FIG. 4B.

At Step 764, the control unit 210 enables the threshold setter unit 296. Then, based on the minimum one of the remaining power values P detected at Steps 710, 740 and 758, the threshold setter unit 296 determines a new threshold Dth in accordance with the table as illustrated in FIG. 8 that is stored in the memory 214 or the memory in the threshold setter unit 296. Alternatively, the threshold setter unit 296 may determine the new threshold Dth in accordance with a formula or function indicative of the relation between the remaining power P and the threshold Dth stored in the memory 214 or the memory of the threshold setter unit 296. At Step 766, the threshold setter unit 296 changes or updates the threshold Dth in accordance with the determined threshold Dth, and then sets the detection mode of operation into the corresponding ON or OFF state. The control unit 210 then disables the threshold setter unit 296.

At Step 530, the control unit 210 causes the RF ID tag 206 to enter into the sleep mode of operation. In the sleep mode, only the control unit 210 and the wakeup unit 270 are enabled or powered ON. The other elements 214 to 250, 276 and 286 to 294 are disabled or powered down. Then, the procedure returns to Step 504.

According to this embodiment described above, depending on the remaining power P or the detected voltage Vbat of the battery 290, the RF ID tag 206 may store the detected temperature values for the changed values with the corresponding fineness or possibly may not detect the temperature, then cumulatively stores the file of data of such detected temperature values over a period of time, and can transmit the detected data file to the reader and writer device 302. Thus, even when the remaining power of the battery 290 reduces to a low level, the minimum desired amount of detected data and the detected data with a minimum precision related to changes in the temperature of the environment of the RF ID tag 206 can be traced and accessed.

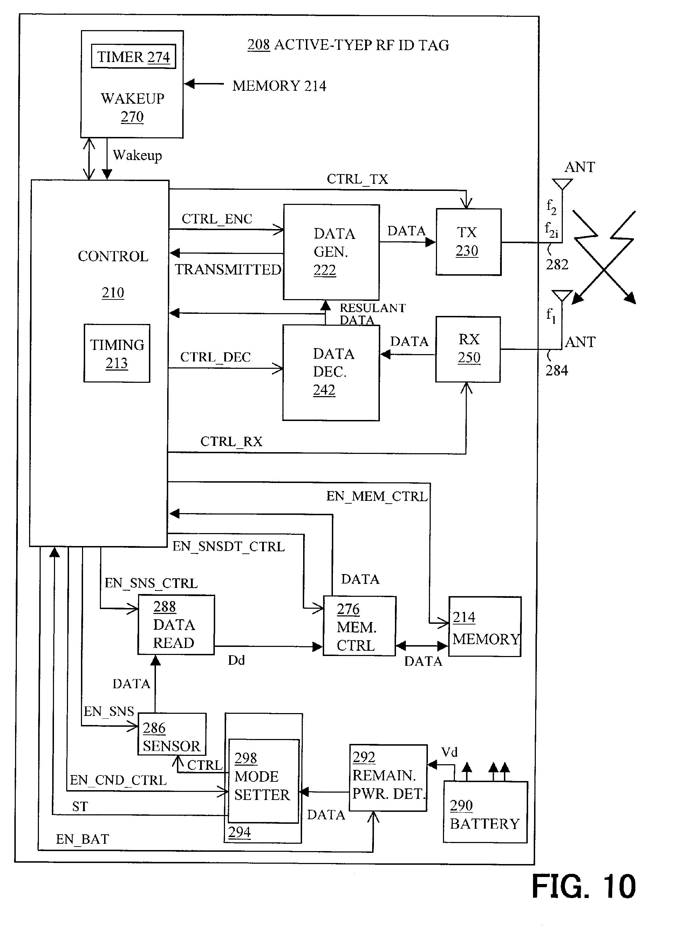

FIG. 10 illustrates a configuration of an active-type RF ID tag 208 as an active-type contactless information storage device, in accordance with another embodiment of the invention. The reader and writer device 302 of FIG. 1 may be used to read information in the RF ID tag 208. In this case, the power saving control unit 294 includes a mode setter unit 298. The other elements of the RF ID tag 208 are similar to those of the RF ID tag 204 of FIG. 5.

In response to the control signal EN_CND CTRL from the control unit 210, the mode setter unit 298 processes the data of the remaining power P of the battery 290 provided by the remaining power detector unit 292, then determines and sets an operation mode depending on the remaining power P, and then controls the operation of the sensor 286 in accordance with the set operation mode.

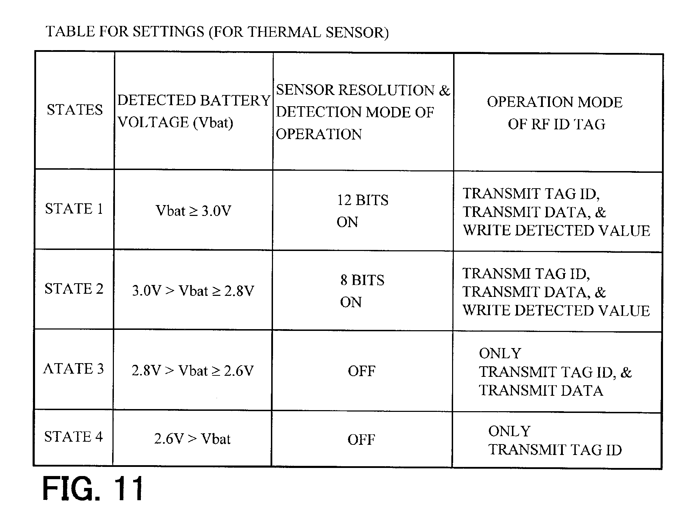

FIG. 11 illustrates a table representing the relation between the resolution of the detected values and the detection operation modes of the sensor 286 as a thermal sensor and the operation modes of the RF ID tag 208, in accordance with the detected voltage Vbat of the battery 290. In this case, it is assumed as an example that the RF ID tag 208 is used for managing the transportation route, the dates and the time of day of a refrigerated transport container and for tracing the change of the temperature inside the container. Depending on the remaining power P of the battery 290, the sensor 286 is enabled and the resolution of detection is determined and set up.

If the detected voltage Vbat indicative of the remaining power P of the battery 290 is sufficiently high and exceeds 3.0 V (Vbat > 3.0 V), then the mode setter unit 298 sets the detection operation mode of the sensor 286 into an ON state, then sets the resolution for the detected value to be 12 bits which causes the highest power consumption, and then sets the operation mode of the RF ID tag 208 into the operation of transmitting the tag ID, transmitting the stored data and writing the detected values.

If the detected voltage Vbat has a lower value and falls within a range higher than 2.8 V and not higher than 3.0 V (3.0 V ≥ Vbat > 2.8 V), then the mode setter unit 298 sets the detection operation mode of the sensor 286 into an ON state, then sets the resolution for the detected value to be 8 bits which causes a lower power consumption, and then sets the operation mode of the RF ID tag 208 into the operation of transmitting the tag ID, transmitting the stored data and writing the detected values.

If the detected voltage Vbat has a lower value and falls within a range higher than 2.6 V and not higher than 2.8 V (2.8 V ≥ Vbat > 2.6 V), then the mode setter unit 298 sets the detection operation mode of the sensor 286 into an OFF state, and then sets the operation mode of the RF ID tag 208 to be the operation of only transmitting the tag ID and transmitting the stored data.

If the detected voltage Vbat has a yet lower value and is not higher than 2.6 V (Vbat ≤ 2.6 V), then the mode setter unit 298 sets the sensor 286 into the OFF operation state or mode, and then sets the operation mode of the RF ID tag 208 to be the operation of transmitting the tag ID alone.

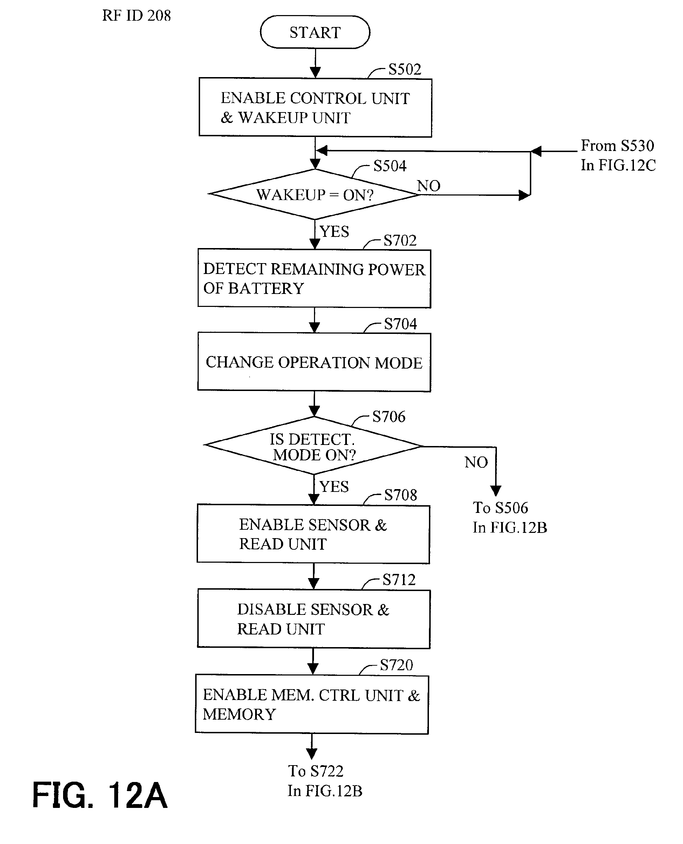

FIGS. 12A to 12C illustrate a flow chart for processing, which is executed by the active RF ID tag 208. FIGS. 12A to 12C are a modification of FIGS. 9A to 9C.

Referring to FIG. 12A, Steps 502 to 504 are similar to those of FIG. 4A.

At Step 702, the control unit 210 enables the remaining power detector unit 292 and the mode setter unit 298. Then, the control unit 210 causes the remaining power detector unit 292 to detect the remaining power P of the battery 290. In accordance with the detected remaining power P, the control unit 210 then determines a new operation mode in accordance with the table as illustrated in FIG. 11 that is stored in the memory 214 or the memory in the mode setter unit 298. At Step 704, the mode setter unit 298 sets up the determined operation mode or changes the current operation mode into this determined operation mode, and then disables the remaining power detector unit 292 and the mode setter unit 298.

Steps 706 to 708, 712 and 720 of FIG. 12A are similar to those of FIG. 9A.

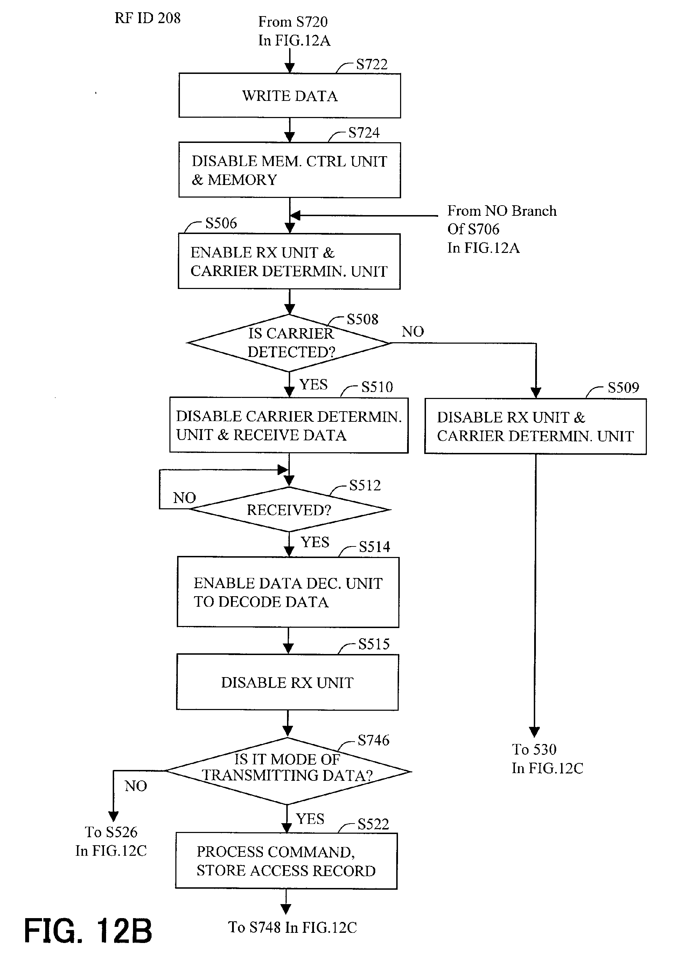

Steps 722 to 724, and 506 to 515 of FIG. 12B are similar to those of FIG. 9B. At Step 722, the control unit 210 temporarily enables the detected-data read unit 288. Then, the memory control unit 276 stores into the memory 214 the data of the detected temperature value retrieved from the detected-data read unit 288.

Referring to FIG. 12B, at Step 746, the control unit 210 determines whether the current operation mode of the RF ID tag 208 is the operation mode of transmitting the stored data in the memory 214. This operation mode corresponds to States 1 to 3 in the table of FIG. 11. If it is determined that the current operation mode is the operation mode of transmitting the stored data, the procedure goes to Step 522. Step 522 is similar to that of FIG. 9B.

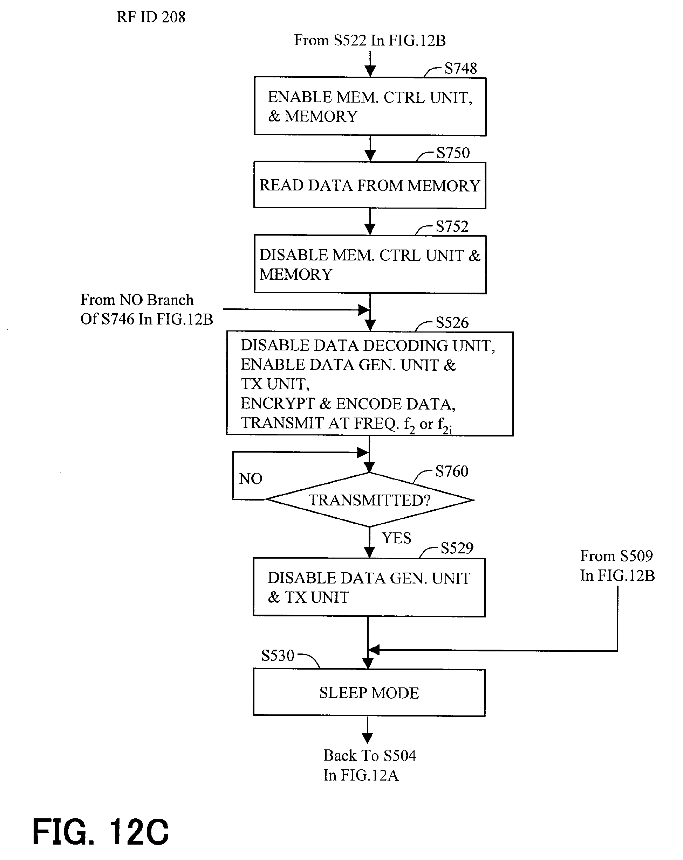

Steps 748 to 752, 526, 760 to 529, and 530 of FIG. 12C are similar to those of FIG. 9C.

According to this embodiment described above, based on the remaining power P or the detected voltage Vbat of the battery 290, the RF ID tag 208 may store the detected temperature values with the corresponding precision or possibly may not detect the temperature, then cumulatively stores the file of data of such detected temperature values over a period of time, and can transmit the data file to the reader and writer device 302. Thus, even when the remaining power of the battery 290 reduces to a low level, the minimum desired amount of detected data and the detected data with a minimum precision can be traced and accessed related to changes in the temperature of the environment of the RF ID tag 208.

Although the embodiments have been described in connection with application to the RF ID tags, it should be understood by those skilled in the art that the invention is not limited to such RF ID tags and is also applicable to contactless IC cards.

The above-described embodiments are only typical examples, and their different combination, modifications and variations are apparent to those skilled in the art. It should be understood that those skilled in the art can make various modifications to the above-described embodiments without departing from the principle of the invention and the accompanying claims.

## Claims

1. An active-type information storage device assessable from a reader and writer device, the active-type information storage device comprising:
a memory which stores information including an identification;
a timer which measures time;
a battery which supplies electric power at least to the timer;
a receiver unit which senses a carrier of an information request signal at a first frequency from the reader and writer device;
a transmitter unit which modulates a carrier with data and transmits a response signal at a second frequency to the reader and writer device;
a control unit which controls the receiver unit and the transmitter unit;
a sensor unit which detects a physical quantity or state and then holds corresponding detected data;
a remaining power detector unit which detects a remaining power of the battery; and
a power management unit which determines an operation mode for the sensor unit in accordance with the remaining power of the battery detected by the remaining power detector unit, wherein
in accordance with the determined operation mode, the control unit causes the receiver unit, the sensor unit or the remaining power detector unit to operate at a particular timing,
in a sleep period of time which occurs intermittently, the control unit causes the transmitter unit, the receiver unit, the sensor unit, the memory and the remaining power detector unit to be in an inactive state,
the power management unit causes the memory to store detected data from the sensor unit that is determined in accordance with the determined operation mode,
the control unit controls the receiver unit to sense a carrier of an RF signal at the first frequency in a carrier sensing period of time, and
when the receiver unit senses and detects a carrier of an RF signal at the first frequency in a particular carrier sensing period of time, the control unit causes the receiver unit to further receive an information request signal, and then in response to the received information request signal, causes the transmitter unit to transmit a response signal at the second frequency carrying the data in the memory.

2. The active-type information storage device according to claim 1, wherein the power management unit comprises:
a threshold setter unit which determines a threshold for detected data in accordance with the remaining power of the battery detected by the remaining power detector unit; and
a comparator unit which processes the detected data obtained from the sensor unit, in accordance with the determined threshold.

3. The active-type information storage device according to claim 1, wherein the power management unit comprises:
a threshold setter unit which determines a threshold for detected data, in accordance with the remaining power of the battery detected by the remaining power detector unit and in accordance with a table describing a relation between the remaining power and the threshold; and
a comparator unit which processes the detected data obtained from the sensor unit, in accordance with the determined threshold.

4. The active-type information storage device according to claim 1, wherein the power management unit comprises:
a threshold setter unit which determines a threshold for detected data in accordance with the remaining power of the battery detected by the remaining power detector unit, as a function of the remaining power and the threshold; and
a comparator unit which processes the detected data obtained from the sensor unit, in accordance with the determined threshold.

5. The active-type information storage device according to claim 1, wherein the power management unit comprises an operation mode setter unit which determines the operation mode for the sensor in accordance with the remaining power of the battery detected by the remaining power detector unit and in accordance with a table describing relation between the remaining power and the sensor operation mode, and which further sets the operation mode for the sensor unit in accordance with the determined operation mode.

6. The active-type information storage device according to claim 1, wherein the power management unit comprises an operation mode setter unit which determines an operation mode for the sensor in accordance with the remaining power of the battery detected by the remaining power detector unit and in accordance with a table describing relation between the remaining power and a plurality of operation modes, each having different power consumptions, and which sets the operation mode for the sensor unit in accordance with the determined operation mode.

7. The active-type information storage device according to claim 6, wherein the plurality of operation modes have respective different detection precisions.

8. The active-type information storage device according to claim 1, wherein
when the remaining power of the battery detected by the power detector unit does not exceed a threshold, the power management unit sets the operation mode for the sensor unit into an OFF state, and
when the operation mode of the sensor unit is an OFF state, the control unit causes the sensor unit to be in an inactive state, and then controls, at the particular timing, the receiver unit to sense a carrier of an RF signal at the first frequency.

9. A program for use in an active-type contactless storage device which is assessable from a reader and writer device, the active-type contactless storage device comprising:
a memory which stores information including an identification;
a timer which measures time;
a battery which supplies electric power at least to the timer;
a receiver unit which senses a carrier of an information request signal at a first frequency from the reader and writer device;
a transmitter unit which modulates a carrier with data and transmits a response signal at a second frequency to the reader and writer device;
a sensor unit which detects a physical quantity or state and then holds corresponding detected data; and
a remaining power detector unit which detects a remaining power of the battery, the program being operable to causing the active-type contactless storage device to execute:
causing, in a sleep period of time which occurs intermittently, the sensor unit, the memory and the remaining power detector unit to be in an inactive state;
determining an operation mode for the sensor unit in accordance with the remaining power of the battery detected by the remaining power detector unit;
causing, in accordance with the determined operation mode, the receiver unit, the sensor unit or the remaining power detector unit to operate at a particular timing;
causing the sensor unit to detect a physical quantity or state and then hold corresponding detected data;
causing, in accordance with the determined operation mode; the memory to store the detected data from the sensor unit;
controlling the receiver unit to sense a carrier of an RF signal at the first frequency in a carrier sensing period of time; and
in response to detection by the receiver unit of a carrier of an RF signal at the first frequency in a particular carrier sensing period of time, causing the receiver unit to further receive an information request signal, and then causing, in response to the received information request signal, the transmitter unit to transmit a response signal at the second frequency carrying the data in the memory.
